# EUROPÄISCHE PATENTSCHRIFT

(11) **EP 4 118 137 B1**
(45) Veröffentlichungstag und Bekanntmachung des Hinweises auf die Patenterteilung: **17.04.2024**
(21) Anmeldenummer: 21707179.4
(22) Anmeldetag: 16.02.2021
(51) Int. Cl.: C08J 11/16

(54) **VERFAHREN UND VORRICHTUNG ZUR WIEDERAUFARBEITUNG POLYKONDENSAT-HALTIGER ABFÄLLE**
METHOD AND DEVICE FOR RECYCLING POLYCONDENSATE-CONTAINING WASTE
PROCÉDÉ ET DISPOSITIF POUR LE RECYCLAGE DE DÉCHETS CONTENANT DES POLYMÈRES DE CONDENSATION

(30) Priorität: 10.03.2020 DE 102020106457
(43) Veröffentlichungstag der Anmeldung: 18.01.2023
(73) Patentinhaber: RITTEC Umwelttechnik GmbH, 21335 Lüneburg (DE)
(72) Erfinder: BIERMANN, Lars, 31177 Harsum (DE); EICHERT, Carsten, 21391 Reppenstedt-Dachtmissen (DE); BREPOHL, Esther, 38116 Braunschweig (DE); SCHOLL, Stephan, 38116 Braunschweig (DE)
(74) Vertreter: Michalski Hüttermann & Partner Patentanwälte mbB
(86) Internationale Anmeldenummer: PCT/EP2021/053719
(87) Internationale Veröffentlichungsnummer: WO 2021/180432

(56) Entgegenhaltungen:
- EP-A1- 0 597 751
- EP-A1- 1 134 211
- WO-A1-2013/014650

## Beschreibung

Die vorliegende Erfindung betrifft ein kontinuierlich arbeitendes Verfahren und eine Vorrichtung zur Aufarbeitung von nicht sortenreinen Kunststoffabfällen, die Polykondensate (PK) wie z.B. Polyalkylenterephthalate (PAT), Polyamide und/oder Polycarbonate enthalten, insbesondere Polyethlyen-, Polybutylen- und Polypropylenterephthalat (PET, PBT und PPT), und insbesondere Polyamid 6, Polyamid 6.6, Polycarbonat insbesondere in Form von Multilayermaterialien.

Mehrschichtige Verbundmaterialien auf Polymerbasis werden im Lebensmittelbereich eingesetzt, um sowohl mechanisch stabile als auch vor Oxidation und anderen chemischen Reaktionen schützende Verpackungen für die Lebensmittel zur Verfügung zu stellen. Eine solche Lebensmittelverpackung ist beispielsweise eine PET-Schale, die mit einer dünnen Lage aus Polyethylen (PE) oder Polyamid (PA) beschichtet ist. Oftmals wird auch eine Sperrschicht aus Ethylen-Vinylacetat Copolymer (EVA) als Sauerstoffbarriere eingesetzt. Zu diesen Lebensmittelverpackungen zählen auch Salatschalen, Wurst- und Käseverpackungen. Weitere polykondensathaltige mehrschichtige Abfälle sind insbesondere Getränkeflaschen, Fasern, Textilien, Automobilbauteile, klare, opake oder gefärbte Waschmittelflaschen und Produktionsabfälle. Als weitere Schichten können einzeln oder in Kombination vorhanden sein: Ethylen-Vinylalkohol-Copolymer (EVOH), Pappe, Polyvinylalkohol (PVOH), Polypropylen (PP), Polystyrol (PS) oder deren Copolymere sowie Metalle.

Derartige Materialmischungen sind schwierig zu recyceln. Aufgrund der Schwierigkeit, die verschiedenen Schichten voneinander zu trennen, werden Mehrschichtsysteme beziehungsweise Multilayermaterialien großtechnisch lediglich thermisch verwertet oder in Deponien verfüllt. Hierbei geht jedoch der Werkstoff aus dem Stoffkreislauf verloren.

Aus dem Stand der Technik sind eine ganze Reihe von Verfahren bekannt, um aus PET-Abfällen Terephthalsäure zu gewinnen, die erneut als Rohstoff eingesetzt werden kann. Diese Verfahren arbeiten entweder mit hohen Drücken und/oder mit hohen Temperaturen und oftmals auch in Batch-Verfahren und somit eher unwirtschaftlich. Es ist bekannt, PET-haltige Abfälle in einem kontinuierlichen Prozess mittels einer basischen Depolymerisation unter Einsatz von NaOH und Zugabe eines Alkohols aufzuschließen.

Es hat sich jedoch gezeigt, dass mit einem solchen Verfahren nur sehr ausgesuchte Abfälle behandelbar sind, die nur einen sehr kleinen Teil der Multilayer-Materialien darstellen oder nicht alle wiedergewinnbaren Inhaltsstoffe zurückgewonnen werden.

Das Dokument EP 1 134 211 A1 betrifft ein Verfahren zur Aufarbeitung von PET, das bis 10% PP und/oder PE enthält. In einer ersten Stufe wird das Material zerkleinert. Dann werden eine saure Depolymerisation und eine Trennung des Festgehalts, oder möglicherweise eine basiche Hydrolyse und auch eine Fest/Flüssig Trennung durchgeführt.

Es ist daher Aufgabe der Erfindung, ein Verfahren und eine Vorrichtung anzugeben, mit denen Abfälle mit einem diverseren Materialmix möglichst umfassend behandelbar sind.

Diese Aufgabe wird durch ein Verfahren gemäß Anspruch 1 und durch eine Vorrichtung gemäß Anspruch 8 gelöst.

Vorteilhafte Weiterbildungen von Vorrichtung und Verfahren sind in den entsprechenden Unteransprüchen angegeben.

Mit der vorliegenden Erfindung sind alle PK-haltigen Materialmixe behandelbar, deren Polyolefingehalt kleiner 50 % (w/w) ist. Je nach Polyolefingehalt werden dabei dieselben Verfahrensschritte jedoch in unterschiedlicher Reihenfolge eingesetzt, so dass mit großem Vorteil auch dieselben Vorrichtungen und Reaktionsgefäße verwendbar sind. Mit anderen Worten ermöglicht die Erfindung die Verwendung ein und derselben Gesamtvorrichtung zur Behandlung unterschiedlicher Abfälle und zur Rückgewinnung unterschiedlicher Rohstoffe.

Die Erfindung unterscheidet dabei zwischen drei unterschiedlichen Arten von Abfällen, im Weiteren jeweils als Feedstrom bezeichnet, die die Reihenfolge der Verfahrensschritte und auch die Aufbereitungsschritte bestimmen:
Feedstrom A weist einen Gehalt an Polyamiden, wie z.B. Polyamid 6.6, von kleiner gleich 15 % (w/w) sowie einen PAT-Gehalt von größer gleich 15 % (w/w) auf. Feedstrom A ist somit PAT-reich und PA-arm.
Feedstrom B weist mit größer 15 % (w/w) den höchsten Gehalt an Polyamiden, wie z.B. Polyamid 6.6 auf, sowie einen PAT-Gehalt von kleiner gleich 15 % (w/w) auf. Feedstrom B ist somit PAT-arm.
Feedstrom C weist einen Gehalt an Polycarbonaten, wie z.B. Poly(2,2-Bis[4-hydroxyphenyl]propylcarbonat) von größer gleich 15 % (w/w) auf sowie einen PAT-Gehalt von größer gleich 15 % (w/w).

Damit ermöglicht das erfindungsgemäße Verfahren die Behandlung zweier unterschiedlicher PK-haltiger Kunststoffmischungen mit hohem PAT-Anteil und gleichzeitig auch die einer Kunststoffmischung mit niedrigem PAT-Gehalt.

In jedem der drei Feedströme beginnt das Verfahren mit einem Vorbehandlungsschritt der Wäsche und der Zerkleinerung auf eine Teilchengröße je nach Anlagengrößen von <3 mm bzw. < 14 mm. Dies erfolgt entweder in der Reihenfolge Wäsche-Zerkleinerung oder Zerkleinerung-Wäsche oder einstufig in Nasszerkleinerung, um Energie und Waschwasser einzusparen. Eine optionale Vortrocknung ist ebenfalls vorgesehen, um den Wassergehalt des Materials auf < 1 % (w/w) zu reduzieren. Diese Vorbehandlung sorgt für eine möglichst große Oberfläche für die nachfolgenden Aufschlußreaktionen sowie für eine Schwächung des Materialverbunds zwischen den verschiedenen Schichten des Multilayermaterials.

In Abhängigkeit von der Art des Feedstroms erfolgen dann weitere Aufbereitungsschritte in spezifischer Reihenfolge.

Im Falle des Feedstroms A, der bevorzugt aus > 90 % (w/w) PET, PBT oder PPT als Hauptkomponente besteht, schließt sich an die Vorbehandlung eine basische Depolymerisation mit anschließender Aufbereitung an.

Im Prozessschritt "Basische Depolymerisation" werden die zerkleinerten Abfälle in einen kontinuierlich arbeitenden, bevorzugt gleichsinnig drehenden Doppelschneckenextruder eingeführt. Dem Reaktionsgemisch werden als weitere Edukte in jedem Fall NaOH zugefügt, es kann zusätzlich auch ein Alkylenglykol beigefügt werden, das insbesondere auch als Produkt der angestrebten Depolymerisation entsteht, insbesondere Monoethylenglykol (MEG). In bevorzugter Ausgestaltung des erfindungsgemäßen Verfahrens wird MEG mit einem solchen Massenstrom beigefügt, dass das Massenstromverhältnis von Abfall zu MEG mindestens 3, insbesondere 3,3, beträgt, um so hohe Durchsatzraten und hohe Qualität der erhaltenen Recyclingprodukte zu erreichen. NaOH wird ein einem Massestromverhältnis von Abfall zu NaOH von mindestens 2, bevorzugt 2,1 zugesetzt. Weitere reaktive Edukte werden nicht zugefügt, jedoch kann Wasser zugegeben werden, um den Löseprozess schon im Extruder zu starten und um die Handhabbarkeit des Stoffstromes zu erleichtern, insbesondere ebenfalls mit einem Massenstromverhältnis wie bei MEG.

In dem Extruder erfolgt kontinuierlich die Verseifungs- bzw. Depolymerisationsreaktion des Polykondensats. Das Reaktionsprodukt Dinatriumterephthalat ist in Wasser löslich (bei 20 °C ca. 140 g/L-Lösung).

Die bevorzugte Verwendung eines gleichsinnig drehenden Doppelschneckenextruders mit dichtkämmenden Schneckenelementen stellt eine gute Durchmischung des Reaktionsgemisches sicher, insbesondere, wenn Natriumhydroxid in Perlform verwendet wird. Gleichzeitig werden die Feststoffe einer hohen mechanischen Beanspruchung unterworfen. Die Temperatur der Depolymerisation wird unterhalb des Zersetzungspunktes des jeweiligen PATs und insbesondere unterhalb des Siedepunktes von MEG gewählt, insbesondere bei 120 bis 180°C, bevorzugt bei 160°C. Optional kann der Doppelschneckenextruder mit einem Inertgas, vorzugsweise Stickstoff, beaufschlagt werden. Hierdurch wird das Einströmen von Sauerstoff oder Luftfeuchtigkeit verhindert. Im Doppelschneckenextruder wird der Stoffstrom bevorzugt während der Depolymerisation geknetet und/oder gemischt und/oder gefördert und/oder rückgefordert. Insbesondere kann in zeitlicher und/oder räumlicher Abfolge eine Abfolge von verschiedenen Knet-, Misch-, Förder- und Rückförderbehandlungen durchgeführt werden, um eine homogene Durchmischung der Feststoffe sowie deren Zermahlung und Aufbrechung zu gewährleisten. Durch geeignete Auswahl der Abfolge der Behandlungen des Reaktionsgemisches im Doppelschneckenextruder kann eine vorteilhaft geringe mittlere Verweilzeit im Reaktionsbehälter von beispielsweise nur 2 Minuten eingestellt werden. Während des einmaligen Förderns durch den Extruder wird das PAT zu 92 % - 97 % depolymerisiert. Bevorzugt wird MEG aus dem Reaktionsaustrag durch Verdampfen entfernt und über Kondensation rückgewonnen.

Der Reaktionsaustrag des Extruders im Schritt der basischen Depolymerisation besteht aus einer gesättigten, wässrigen Lösung aus Dinatriumterephthalat, Monoethylenglykol und nicht reagierten Anteilen des Natriumhydroxids und des PAT-Abfalls, wie z.B. PET-Reste, geringfügige Mengen von Abbauprodukten von PA und Farbstoffen, anderen Polymeren, wie z.B. PE, PP und PS aber auch Metalle, Pappe. Die Wasserzugabe reduziert die Viskosität, sodass der Extruderaustrag z.B. direkt in einen Inline-Dispergierer gefördert werden kann.

Dort wird der Dinatriumterephthalatanteil des Extrudats kontinuierlich vollständig gelöst. Polyamide, wie z.B. PA 6.6, gehen bei den bevorzugten Betriebsbedingungen von T = 130 °C - 160 °C unverändert aus der basischen Depolymerisation hervor und werden in einem Transferschritt so aufbereitet, dass sie nach Wäsche, Fest/Flüssigtrennung und Trocknung dem Prozessblock "Saure Depolymerisation" (siehe unten) zugeführt werden.

Im anschließenden Aufbereitungsschritt, der hier insbesondere ein Schritt der "TPA-Gewinnung" ist, wird der verbliebene Reaktionsaustrag des Extruders mit einer Säure versetzt, um aus der in der basischen Depolymerisation erhaltenen Dinatriumterephthalatlösung Terephthalsäure (TPA) auszufällen, die anschließend mittels Filtration gewonnen wird. Als Säure eignet sich erfindungsgemäß insbesondere Schwefelsäure mit einer Konzentration von 25 % (w/w).

Feedstrom B wird nach der Vorbehandlung dem Prozessschritt "saure Depolymerisation" zugeführt. Diesem Prozessschritt werden auch die nicht der TPA-Gewinnung unterzogenen Reststoffe des Feedstroms A zugeführt, wie geschildert. Feedstrom B sollte bevorzugt aus > 15 % (w/w) Polyamid 6 und/oder Polyamid 6.6 als Hauptkomponente bestehen. Nachfolgend wird das Verfahren unter Einsatz des Feedstroms B beschrieben.

Das Reaktionsgefäß dieses Prozessschrittes ist bevorzugt ein Rührreaktor, Schaufelmischer, Pflugscharmischer oder Knet-Reaktor. Die zerkleinerten PA 6.6-haltigen Abfallstücke werden unter stetigem Rühren unter Rückfluss in wässriger Säure suspendiert und erhitzt, die sich vollständig lösen. Die Mischung wird erhitzt, um die gebildeten Oligomere in Monomere aufzuspalten. Nach einer Fest/Flüssig-Trennung schließt sich der Aufbereitungsschritt an, wobei der erhaltene Feststoff mittels eines Transferschritts dem Prozessschritt der basischen Depolymerisation zugeleitet wird. Das Filtrat wird dem nachfolgenden Aufbereitungsschritt zugeführt und so behandelt, dass Adipinsäure auskristallisiert. Diese wird gewaschen und umkristallisiert. Die Kristalle werden abfiltriert und anschließend getrocknet. Aus dem Filtrat der Adipinsäureabtrennung wird durch Destillation Hexamethylendiamin erhalten. Übrig bleiben HCl, H₂O und Reststoffe. Der Prozesschritt der sauren Depolymerisation kann auch quasi-kontinuierlich mit apparativem Wechselbetrieb oder vollkontinuierlich in z.B. einem Schaufelmischer, Pflugscharmischer oder Knet-Reaktor ausgeführt werden. Enthält der Feedstock B PA 6 als Hauptkompomenten, entsteht Caprolactam als Produkt, welches ohne Kühlungskristallisation durch Destillation aus der sauren Reaktionsmischung abgetrennt wird.

In dem Transferschritt werden nach Wäsche und Fest/Flüssig-Trennung sowie Trocknung ein Feedstrom A' erhalten, der dem Prozessschritt der basischen Depolymerisation zugeführt und wie oben beschrieben behandelt wird.

Im Falle des Feedstroms C schließlich wird dieser ebenfalls zunächst dem Prozeßschritt der basischen Depolymerisation unterzogen, an den sich ein Aufbereitungsschritt anschließt, der auch hier ein Schritt der "TPA-Gewinnung" ist, in dem der verbliebene Reaktionsaustrag des Extruders mit einer Säure versetzt, um aus der in der basischen Depolymerisation erhaltenen Dinatriumterephthalatlösung Terephthalsäure (TPA) auszufällen, die anschließend mittels Filtration gewonnen wird. Nach Fällung erfolgt eine Fest/Flüssig-Trennung bei der der abgetrennte Feststoff TPA ergibt und bei der das Filtrat nach Kristallisation letztendlich Bisphenol A ergibt.

Feedstrom C besteht aus > 15 % (w/w) Polycarbonat als Hauptkomponente sowie PET, PBT oder PPT als Nebenkomponente.

Bei diesem Feedstrom C kann zusätzlich zu NaOH, Wasser und MEG auch ein Katalysator hinzugefügt sein, insbesondere Zinkacetat, Natriumcarbonat, Natriumhydrogencarbonat, Zinkchlorid und/oder Bleiacetat. Es wird ein konstantes stöchiometrisches Verhältnis von etwa 2,1 Mol NaOH bezogen auf die konstitutionelle Repetiereinheit von Polycarbonats eingestellt. Das Reaktionsprodukt enthält sowohl Dinatriumterephthalat, das in Wasser löslich ist (bei 20 °C ca. 140 g/L-Lösung), als auch Bisphenol A, das ebenfalls in basischen Lösungen löslich ist. Das Lösen erfolgt dabei kontinuierlich in einem Inline-Dispergierer unter Zugabe von weiterem Wasser. Bei der anschließenden Fest/Flüssig-Trennung werden die nicht reagierten und nicht in Wasser löslichen Bestandteile der Edukte separiert, dies können z. B. andere Polymere wie PE, PP und PS sein oder auch PET- und PC-Reste sein. Die filtrierte Lösung wird dann einer Aufreinigung unterzogen, wobei Verunreinigungen, wie z. B. Farbstoffe, abgetrennt werden können. Es folgt eine Fällung mittels einer starken Säure wie Schwefelsäure. Dabei fällt instantan Terephthalsäure aus. Diese wird durch Fest/Flüssig-Trennung gewonnen und vom Filtrat abgetrennt. Die Terephthalsäure wird mit Wasser gewaschen und getrocknet. In dem Filtrat ist die Wertkomponente Bisphenol A weiterhin enthalten, welches langsam aus der Lösung auskristallisiert. Das Bisphenol A kann nach abgeschlossener Kristallisation durch eine Fest/Flüssig-Trennung sowie anschließende Wäsche sowie Trocknung gewonnen werden kann.

Die der Erfindung zu Grunde liegende Vorrichtungsaufgabe wird gelöst durch eine Vorrichtung aufweisend eine Vorbehandlungseinheit prozeßtechnisch alternativ gefolgt von einer Einheit der basischen Depolymerisation oder einer Einheit der sauren Depolymerisation, jeweils mit sich prozeßtechnisch anschließender Aufbereitungseinheit, wobei eine Transfereinheit zwischen den beiden Depolymerisationseinheiten vorgesehen ist, die eine Überführung von Stoffströmen von einer Depolymerisationseinheit in die andere ermöglichend ist.

Die Einheit für die basische Depolymerisation weist einen temperierbaren Reaktorbehälter als Extruder oder als Knetreaktor - vorzugsweise mit selbstreinigenden Schaufeln - auf, Mittel zum Zuführen eines Eduktstroms aus PAT-haltigen Körpern < 3 mm bzw. < 14 mm, Mittel zum Zuführen von MEG, Mittel zum Zuführen einer Base, Mittel zum Zuführen von Wasser und vorzugsweise von Inertgas auf. Die Mittel zum Zuführen der Base, bevorzugt eines Alkalihydroxids und ganz besonders bevorzugt von NaOH-Pellets sind eine gravimetrische Dosiereinrichtung mit einem Zwangsförderer. Sie können erfindungsgemäß als Feststoffdosierer ausgestaltet sein. Die Mittel zum Zuführen des MEG umfassen ebenfalls eine gravimetrische Dosiereinheit. Die Mittel zum Zuführen des Wassers umfassen ebenfalls eine gravimetrische Dosiereinheit.

Der Reaktorbehälter ist bevorzugt als Doppelschneckenextruder, vorzugsweise gleichsinnig drehend, mit dicht kämmender Doppelwellenschnecke ausgebildet, wobei die Schneckenanordnung mindestens ein Schneckenelement aufweist, dessen äußerer Durchmesser zum inneren Durchmesser in einem besonders geeigneten Verhältnis von etwa 1,7, insbesondere 1,66, steht. Bei der Schneckenanordnung steht eine Länge zum äußeren Durchmesser in einem Verhältnis von etwa 60, wodurch Verweilzeiten von lediglich 2 Minuten einstellbar sind. Besonders bevorzugt weisen die Fördermittel hintereinander angeordnet fördernde, förderneutrale und/oder rückfördernde Schneckenelemente auf, um das Reaktionsgemisch in dem Reaktor abschnittsweise zu fördern, zu kneten oder rückzufördern. Die geeignete Abfolge verschiedener Knet-, Misch-, Förder- und Rückförderelemente erreicht mit Vorteil eine homogene Durchmischung der Feststoffe sowie deren Zermahlung und Aufbrechung. Die Schneckenelemente können im Rahmen der Erfindung eine Länge von etwa dem einfachen bis doppelten des Durchmessers aufweisen. Sie sind auf eine Welle aufgefädelt und können bei einem Gangzahlwechsel Distanzscheiben oder Übergangselemente aufweisen. Fördernde und förderneutrale Knetelemente sind ebenfalls vorgesehen, die Energie in die Reaktionsmischung eintragen, um die Reaktion zu beschleunigen. Der Einsatz von einem rückfördernden Element führt zu einem Abstauen der Reaktionsmischung. Ein enger Spalt zwischen den rückfördernden Elementen erzwingt erfindungsgemäß das Verweilen der Reaktionsmischung, bis die Abfallreste durch den Spalt zwischen Elementen und der Zylinderwand gepresst werden. Wenn einige Schneckenelemente als fördernde Mischelemente ausgestaltet sind, wird eine sehr gute Durchmischung erreicht bei geringer Scherung, welche das Reaktionsprodukt weniger stark mechanisch belastet als Knetelemente. Die Mittel zur abschnittsweisen Temperierung des Doppelschneckenextruders ermöglichen es, eine für die jeweilige mechanische Behandlung angepasste Temperaturführung zu wählen. Einzelne Gehäuseabschnitte des Reaktionsbehälters sind jeweils mit einer individuell ansteuerbaren elektrischen Heizung und einer Wasserkühlung ausgestattet.

Im Falle eines Knetmischers als Reaktionsgefäß wird die Verseifung der PATs innerhalb von 1-60 min erreicht.

Das erfindungsgemäße Verfahren toleriert mit Vorteil auch Verunreinigungen wie beispielsweise Additive, Füllstoffe, Färbemittel, Pigmente, Umhüllungen, Etiketten, Metalle und Metallbeschichtungen, Pappe und dergleichen. Die Verunreinigungen werden durch Filtration und/oder andere Verfahrensstufen abgetrennt.

### Beispiel 1 Feedstrom A

In einen gleichläufigen Doppelschneckenextruder mit einem Schneckendurchmesser von 27 mm gibt man unter Inertgasatmosphäre kontinuierlich mit Hilfe von zwei Dosiereinrichtungen 6,66 kg/h PE beschichtete PET-Flakes und 2,91 kg/h Natriumhydroxid. Die Gehäusetemperatur des Extruders wird zwischen 160-180°C eingestellt. Die Drehzahl der Doppelschnecke beträgt 500 U/min. Die Entnahme einer Probe des Produkts zeigt einen PET-Verseifungsgrad von >80%. Im Doppelschneckenextruder wird das entstehende MEG destillativ entfernt. Der so erhaltene Feststoff besteht im Wesentlichen aus Mono- und Dinatriumterephthalat sowie nicht reagierten PE-Anteilen. Der Extruderaustrag wird in Wasser gelöst und anschließend einer Fest-Flüssig-Trennung unterzogen, bevor die Lösung gereinigt und die TPA mit Hilfe einer starken Säure ausgefällt wird. Der abfiltrierte Feststoff wird gewaschen und getrocknet und der sauren Depolymerisation zugeführt.

### Beispiel 2 Feedstrom A

In der gleichen Vorrichtung wie in Beispiel 1 wird ein Feedstrom A zugeführt, der unter anderem mit PA beschichtetes PET sowie weitere Polymere, insbesondere Polyolefine wie PP, enthält. In dem Feedstrom sind etwa 6,66 kg/h PA/PP beschichtete PET-Flakes enthalten, die 2,91 kg/h Natriumhydroxid unter Zugabe von 0,9 kg/h MEG werden jeweils getrennt dosiert in den Extruder eingebracht. Die gesamte Apparatur wird dabei mit Inertgas überlagert. Die Gehäusetemperatur des Extruders wird zwischen 140-160°C eingestellt. Die Drehzahl der Doppelschnecke beträgt 400 U/min. Die Entnahme einer Probe des Produkts zeigt einen PET-Verseifungsgrad von >90%. Im Doppelschneckenextruder werden das eingesetzte sowie das entstehende MEG bei vermindertem Druck entfernt. Der so erhaltene Feststoff besteht im Wesentlichen aus Mono- und Dinatriumterephthalat sowie nicht reagierten Polyolefinanteilen, insbesondere aus PP-Anteilen sowie PA-Anteilen. Diese werden zur sauren Depolymerisation transferiert.

### Beispiel 3 Feedstrom A

In diesem Ausführungsbeispiel werden 6,66 kg/h PET-haltige Abfälle, 2,91 kg/h Natriumhydroxid und bis zu 10 kg/h Wasser verarbeitet. Das Verhältnis aus Natriumhydroxid zu PET-Abfällen wird während des Prozesses so eingestellt, dass ein konstantes stöchiometrisches Verhältnis von etwa 2,1 bezogen auf die konstitutionelle Repetiereinheit von Polyalkylenterephthalat eingehalten wird.

### Beispiel 4 Feedstrom B

Die zerkleinerten PA 6.6-haltigen Abfallstücke werden bei 108 °C unter stetigem Rühren unter Rückfluss für 30 min - 360 min in wässriger Salzsäure (6 mol/L) suspendiert und erhitzt. Es wird 0,75 mol Polymer / L bezogen auf die konstitutionelle Repetiereinheit in den Rührreaktor gegeben. Nach etwa 30 min ist das PA 6.6 vollständig gelöst. Die Mischung wird für weitere 300 min erhitzt. Nach einer Fest/Flüssig-Trennung wird das Filtrat auf 5 °C abgekühlt und für eine Verweilzeit von 12 h - 24 h stehen gelassen. Dabei kristallisiert Adipinsäure aus, die mit Wasser gewaschen und in einer wässrigen Ethanollösung mit 0,3 mol EtOH/mol umkristallisiert wird. Die Kristalle werden abfiltriert und anschließend getrocknet. Aus dem Filtrat der Adipinsäureabtrennung wird durch Destillation das andere Monomer Hexamethylendiamin erhalten. Übrig bleiben HCl, H₂O und Reststoffe.

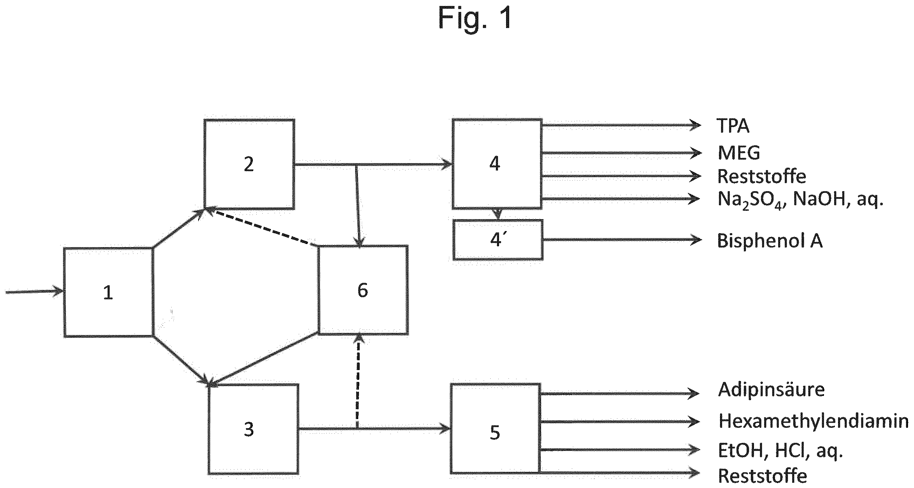

Das erfindungsgemäße Verfahren wird nachfolgend anhand der Figur 1 erläutert. Diese zeigen im Einzelnen:
- Figur 1:: Blockschema des erfindungsgemäßen Verfahrens,

**Fig. 1** zeigt ein Blockschema des erfindungsgemäßen Verfahrens. Die geeigneten Abfälle werden in einem ersten Schritt 1 gewaschen und zerkleinert, optional vorgetrocknet, bevor sie in einem zweiten Schritt je nach Zusammensetzung des Abfalls entweder zunächst der basischen Depolymerisation 2 oder zunächst der sauren Depolymerisation 3 zugeführt werden. An diese beiden Schritte schließen sich jeweils Aufbereitungsschritte 4, 5 an, in denen die Reaktionsprodukte der beiden Depolymerisationen isoliert, gereinigt und somit gewonnen werden. Im Fall der basischen Depolymerisation sind dies: TPA, MEG sowie Na₂SO₄, NaOH, Wasser und Reststoffe. Im Fall der sauren Depolymerisation sind dies Adipinsäure, Hexamethylendiamin, EtOH, HCl, nicht recyclebare Reststoffe.

Erfindungsgemäß ist nun ein Transferschritt 6 vorgesehen, mit dem ein Teil des Stoffstromes nach der einen als Edukt in die andere Depolymerisation überführt wird. Dieser Transferschritt enthält die Teilschritte Waschen, Fest-Flüssig-Trennung und ggf. Trocknung. Mit diesem Transferschritt wird erreicht, dass Wertstoffe, die mit der einen Depolymerisation nicht erhalten werden können, durch die andere Depolymerisation erhalten werden. Dies führt mit großem Vorteil zu einer kombinierten und effizienten Aufbereitung des Multilayer-Abfalls. Durchgezogen dargestellt ist der Transfer nach der basischen zur sauren Depolymerisation, gepunktet derjenigen nach der sauren zur basischen Depolymerisation.

Der Aufbereitungsschritt 4 der basischen Depolymerisation enthält einen Teilschritt 4', der bei Einsatz des Feedstocks C zur Gewinnung von Bisphenol A dient und der nur bei diesem Feedstock C Anwendung findet. Dieser Teilschritt 4' beginnt nach der Fällung und Abtrennung des TPA in dem so erhaltenen Filtrat. Dieser Aufbereitungsschritt 4' umfasst die Teilschritte Kristallisation, Fest-Flüssig-Trennung, Wäsche und erneute Fest-Flüssig-Trennung.

Der Schritt 2 der basischen Depolymerisation verwendet einen modular aufgebauten Doppelschneckenextruder aus 14 Temperaturzonen, die je mit einer individuell ansteuerbaren elektrischen Heizung und Wasserkühlung ausgestattet sind. Das Verhältnis des äußeren Schneckendurchmessers Da zum inneren Schneckendurchmesser Di beträgt 1,66. Das Verhältnis der Schneckenlänge L zum Durchmesser der Schnecke D beträgt 60. Der Extruder besteht in aus 15 Zylindern. Das Gerät ist mit bis zu drei Drucksensoren ausgestattet, die in die Zylinderöffnung der Einsprühdüse eingesetzt sind. Die Zylinder 2 bis 15 werden auf 160°C temperiert. Zylinder 1 wird nicht temperiert. Die Drehzahl der gleichsinnig drehenden Doppelschnecke wird auf 100 U/min eingestellt. Die Dosierung des zerkleinerten Abfalls erfolgt über einen Feststoffdosierer gravimetrisch. In Zylinder 2 wird über die Einfüllöffnung oben ggf. MEG mit Hilfe einer gravimetrischen Dosierung hinzugegeben. Über die Seitendosierung in Zylinder 4 wird festes Natriumhydroxid in Perlform gravimetrisch über eine zweite Dosiereinrichtung mit Hilfe eines Zwangsförderers hinzugegeben. Der Zylinder 4 weist außerdem eine atmosphärische Öffnung auf. Beide Feststoffdosierer sind mit Inertgas beaufschlagt, um das Einströmen von Sauerstoff und (Luft-)Feuchtigkeit zu verhindern. Über eine atmosphärische Öffnung in Zylinder 6 sowie Zylinder 10 werden das eingesetzte und das gebildete MEG durch Kondensation zurückgewonnen.

Die Schneckenkonfiguration ist in Tabelle 1 dargestellt. Die angegebenen Winkelgradwerte bezeichnen jeweils den Winkel zwischen den Scheiben der Knetelemente. Es wird eine Abfolge von verschiedenen Knet-, Misch-, Förder- und Rückförderelementen verwendet, die eine homogene Durchmischung der Feststoffe gewährleisten und die Beschickung mechanisch zermahlen und aufbrechen, sodass eine Reaktion von allen/verschiedenen Seiten an den Flakes der Beschickung stattfindet. Durch die Auswahl der dargestellten Schneckenkonfiguration wird die mittlere Verweilzeit des PET-Abfalls im Extruder auf etwa 2 min eingestellt. In dieser Reaktionszeit findet ein Umsatz des PET-Anteils im PET-haltigen Abfall zu 92-97% statt.

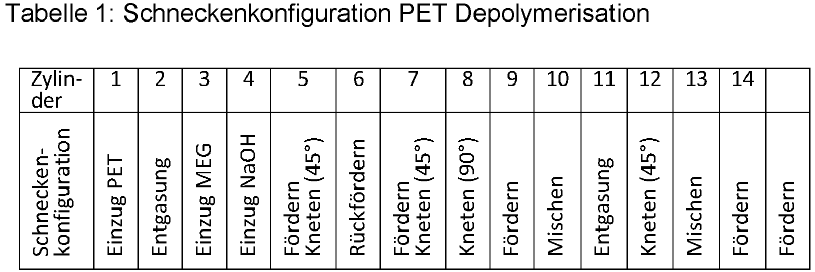

Der pastöse Reaktionsaustrag wird in der Aufbereitung 4 weiter behandelt, insbesondere in einem Rührkessel oder einer Mischschnecke in Wasser behandelt, so dass Dinatriumterephthalat weiter, insbesondere vollständig (55 kg/h, 133 g/L Löslichkeit des Dinatriumterephthalats) gelöst wird. Anschließend folgt eine Fest-Flüssig-Trennung, deren Filterkuchen aus unlöslichen Reststoffe wie PET-Resten, PE, PP, Metalle, PS, Pappe über den Transferschritt 6 unter Wasserzugabe der sauren Depolymerisation zugeführt wird. Deren Filtrat wird nach Reinigung einer TPA-Fällung unterzogen, indem die Lösung mit Schwefelsäure (9,6 kg/h, 25%(w/w)) versetzt wird. Die ausgefallene TPA wird durch Filtration gewonnen, mit Wasser gewaschen und erneut filtriert. Das so erhaltene TPA wird mit Wasser gewaschen, um Reste der Schwefelsäure und des Natriumsulfats, das sich bei der Fällung bildet, zu entfernen. Schließlich wird eine erneute Fest-Flüssig-Trennung vorgenommen, um das feste in Wasser unlösliche TPA vom Waschwasser zu trennen.

Die Aufbereitung 5 beginnt mit einer Fest-Flüssig-Trennung, deren pastöser Filterkuchen wiederum dem Transferschritt unterworfen wird, in dem eine Wäsche, eine Fest-Flüssig-Trennung und eine Trocknung stattfinden, bevor der Feststoff der basischen Depolymerisation zugeführt wird. Das Filtrat wird gekühlt, erneut filtriert und das so erhaltene Filtrat destilliert, um Hexamethylendiamin zu erhalten. Der Filterrückstand wird bei 40°C bis 70°C umkristallisiert, gefiltert, der Filterrückstand gewaschen und erneut gefiltert, so dass Adipinsäure erhalten wird. Reststoffe verbleiben im Destillationsrückstand und werden entsorgt.

Mit großem Vorteil stellt die Erfindung ein kontiunierliches Verfahren zur Behandlung und Wiedergewinnung von Rohstoffen aus polykondensathaltigen PAT-Abfällen zur Verfügung, bei dem die Stoffströme erst der einen und dann der anderen von einer basischen und einer sauren Depolymerisation unterworfen werden, wodurch sowohl Adipinsäure und Hexamethylendiamin als auch Terephthalsäure und Bisphenol A wiedergewonnen werden können.

## Patentansprüche

1. Verfahren zur kontinuierlichen, semi-kontiunierlichen oder absatzweisen Aufarbeitung von Polykondensaten, insbesondere Polyethylenterephthalat, Polyamid 6, Polyamid 6.6, Polybutylenterephthalat oder Polypropylenterephthalat, enthaltenden Abfällen, die einen Polyolefingehalt von weniger als 50 % (w/w) aufweisen, aufweisend
- eine erste Stufe der Vorbehandlung des Abfalls mittels Wäsche und Zerkleinerung auf eine Teilchengröße von < 3mm bzw. < 14 mm,
- eine Stufe der kontinuierlichen basischen Depolymerisation mittels eines temperierten Extruders, dem neben dem Abfall aus der ersten Stufe als weitere Edukte ein als Produkt der Depolymerisation entstehender Alkohol, insbesondere Monoethylenglykol, sowie NaOH und ggf. Wasser jedoch keine weiteren reaktiven Bestandteile zugeführt werden,
- eine Stufe der Aufbereitung des Abstroms aus der Stufe der basischen Depolymerisation mit einem oder mehreren Schritten gewählt aus der Gruppe gebildet durch Wäsche, Fest/Flüssig- Trennung, Fällung, Lösen, die ein- oder mehrfach eingesetzt werden,
- eine Stufe der sauren Depolymerisation, mittels eines kontinuierlich oder semikontiunierlich oder absatzweise arbeitenden Reaktionsgefäßes, dem neben dem Abfall aus der ersten Stufe eine Säure zugeführt werden,
- eine Stufe der Aufbereitung des Abstroms aus der Stufe der sauren Depolymerisation mit einem oder mehreren Schritten gewählt aus der Gruppe gebildet durch Wäsche, Fest/Flüssig-Trennung, Fällung, Lösen, Umkristallisation, Destillation, die ein- oder mehrfach eingesetzt werden, und
- einen Transferschritt zwischen den beiden Depolymerisationen oder zwischen einer Aufbereitungsstufe und einer Depolymerisation.

2. Verfahren nach Anspruch 1, bei dem im Schritt der basischen Depolymerisation MEG mit einem solchen Massenstrom beigefügt wird, dass das Massenstromverhältnis von den Abfällen zu MEG mindestens 3, insbesondere etwa 3,3, beträgt und/oder dass NaOH mit einem solchen Massenstrom beigefügt wird, dass das stöchiometrische Verhältnis zu Polyalkylenterephthalat bezogen auf eine konstitutionelle Repetiereinheit mindestens 2, insbesondere etwa 2,4, ist.

3. Verfahren nach Anspruch 1 oder 2, bei dem der Schritt der basischen Depolymerisation bei einer Temperatur unterhalb des Zersetzungspunktes des Polyalkylenterephthalats und/oder unterhalb des Siedepunktes von Monoethylenglykol, insbesondere bei 160°C, durchgeführt wird.

4. Verfahren nach einem der vorhergehenden Ansprüche, bei dem das Reaktionsgemisch während der basischen Depolymerisation geknetet und/oder gemischt und/oder gefördert und/oder rückgefördert wird.

5. Verfahren nach einem der vorhergehenden Ansprüche, bei dem ein Schritt oder mehrere Schritte unter Inertgas durchgeführt werden.

6. Verfahren nach einem der vorhergehenden Ansprüche, bei dem der Transferschritt zwischen der basischen und der sauren Depolymerisation den durch eine am Reaktionsabstrom der basischen Depolymerisation vollzogenen Fest-Flüssig-Trennung erhaltenen Filterkuchen als Edukt zur sauren Depolymerisation überführt.

7. Verfahren nach einem der vorhergehenden Ansprüche, bei dem der Transferschritt zwischen der sauren und der basischen Depolymerisation den durch eine am Reaktionsabstrom der sauren Depolymerisation vollzogenen Fest-Flüssig-Trennung erhaltenen Filterkuchen als Edukt zur basischen Depolymerisation überführt.

8. Vorrichtung zur Durchführung eines Verfahrens zur Wiederaufarbeitung nach einem der Ansprüche 1 bis 7, aufweisend einen ersten Reaktorbehälter für die basische Depolymerisation mit im Prozessablauf nachfolgenden Mitteln zur Aufbereitung des Reaktorabstroms, einen zweiten Reaktorbehälter für die saure Depolymerisation mit im Prozeßablauf nachfolgenden Mitteln zur Aufbereitung des Reaktorabstroms sowie Mittel zum Transfer eines Reaktorabstroms zum anderen Reaktorbehälter.

9. Vorrichtung nach Anspruch 8, **dadurch gekennzeichnet, dass** die Mittel zur Aufbereitung Destillationsmittel, Fest/Flüssig- Trennmittel, Waschmittel, Kristallisationsmittel und Temperaturmittel umfassen.

10. Vorrichtung nach einem der Ansprüche 8 bis 9, **dadurch gekennzeichnet, dass** die Transfermittel Waschmittel, Trocknungsmittel und Fest/Flüssig-Trennmittel umfassen.

## Claims

1. A method for the continuous, semi-continuous or batchwise processing of polycondensates, in particular polyethylene terephthalate, polyamide 6, polyamide 6.6, polybutylene terephthalate or polypropylene terephthalate, containing waste, which have a polyolefin content of less than 50% (w/w) comprising:
- a first stage of pretreating the waste by washing and shredding to a particle size of < 3 mm or < 14 mm,
- a stage of continuous basic depolymerization by means of a temperature-controlled extruder, to which, in addition to the waste from the first stage as further educts, an alcohol, in particular monoethylene glycol, produced as a product of the depolymerization, as well as NaOH and possibly water are added but no other reactive components,
- a stage of processing the effluent from the basic depolymerization stage with one or more steps selected from the group including washing, solid/liquid separation, precipitation, dissolving, which are used once or multiple times,
- a stage of acid depolymerization by means of a continuously or semi-continuously or batchwise operating reaction vessel, to which an acid is added in addition to the waste from the first stage,
- a stage of processing the effluent from the acid depolymerization stage with one or more steps selected from the group including washing, solid/liquid separation, precipitation, dissolving, recrystallization, distillation, which are used once or multiple times, and
- a transfer step between the two depolymerizations or between a processing stage and a depolymerization.

2. The method according to claim 1, in which MEG is added in the basic depolymerization step in such a mass flow that the mass flow ratio of waste to MEG is at least 3, in particular about 3.3, and/or NaOH is added with a mass flow such that the stoichiometric ratio to polyalkylene terephthalate relative to a constitutional repeating unit is at least 2, in particular about 2.4.

3. The method according to claim 1 or 2, in which the step of basic depolymerization is performed at a temperature below the decomposition point of polyalkylene terephthalate and/or below the boiling point of monoethylene glycol, in particular at 160°C.

4. The method according to any one of the preceding claims, in which the reaction mixture is kneaded and/or mixed and/or conveyed and/or returned during the basic depolymerization.

5. The method according to any one of the preceding claims, in which one or more steps are carried out under inert gas.

6. The method according to any one of the preceding claims, in which the transfer step between the basic and the acidic depolymerization transfers the filter cake obtained by a solid-liquid separation carried out on the reaction effluent of the basic depolymerization as educt to the acid depolymerization.

7. The method according to any one of the preceding claims, in which the transfer step between the acid and the basic depolymerization transfers the filter cake obtained by a solid-liquid separation carried out on the reaction effluent of the acid depolymerization as educt to the basic depolymerization.

8. A device for performing a recycling method according to any one of claims 1 to 7, having a first reactor vessel for the basic depolymerization with means for treating the reactor effluent downstream in the process sequence, a second reactor vessel for the acid depolymerization with means for treating the reactor effluent downstream in the process sequence and means for transferring a reactor effluent to the other reactor vessel.

9. The device according to claim 8, **characterized in that** the processing agents include distillation agents, solid/liquid separating agents, washing agents, crystallization agents and temperature control agents.

10. The device according to any one of claims 8 to 9, **characterized in that** the transfer means include washing agents, drying agents and solid/liquid separating agents.

## Revendications

1. Procédé de traitement continu, semi continu ou par segments de produits de polycondensation, notamment de poly éthylène téréphtalate, de polyamide 6, de polyamide 6,6, de poly butylène téréphtalate ou de propylène téréphtalate, contenant des déchets, qui présentent une teneur en poly oléfines inférieure à 50 % (p/p), présentant
- une première étape de prétraitement du déchet au moyen d'un lessivage et d'une division dans une taille particulaire < 3 mm, respectivement < 14 mm,
- une étape de dépolymérisation basique continue, au moyen d'une extrudeuse thermostatée, de l'alcool généré sous forme de produit de dépolymérisation à côté du déchet provenant de la première étape sous forme d'autre produit de réaction, notamment de mono éthylène glycol, bien qu'en dehors de NaOH et éventuellement d'eau, aucun autre constituant réactif ne soit ajouté,
- une étape de traitement de l'effluent provenant de l'étape de dépolymérisation basique avec une ou plusieurs étapes choisies dans le groupe formé par un lessivage, une séparation solide/liquide, une précipitation, une dissolution, qui peuvent être employées une ou plusieurs fois,
- une étape de dépolymérisation acide au moyen d'un récipient réactionnel fonctionnant de manière continue ou semi continue ou par segments, auquel on ajoute un acide à côté du déchet de la première étape,
- une étape de traitement de l'effluent provenant de l'étape de dépolymérisation acide avec une ou plusieurs étapes choisies dans le groupe formé par un lessivage, une séparation solide/liquide, une précipitation, une dissolution, une recristallisation, une distillation, qui sont employées une ou plusieurs fois, et
- une étape de transfert entre les deux dépolymérisations ou entre une étape de traitement et une dépolymérisation.

2. Procédé selon la revendication 1, chez lequel, dans l'étape de la dépolymérisation basique, du MEG est ajouté avec un tel débit que le rapport des débits des déchets sur le MEG est d'au moins 3, en particulier, d'environ 3,3, et/ou que NaOH est ajouté avec un tel débit que le rapport stoechiométrique par rapport au poly alcylène téréphtalate est d'au moins 2, en particulier environ 2,4 pour une unité de répétition constitutionnelle.

3. Procédé selon la revendication 1 ou la revendication 2, chez lequel l'étape de la dépolymérisation basique est effectuée à une température en-dessous du point de dissociation du poly alcylène téréphtalate et/ou en-dessous du point d'ébullition du mono éthylène glycol, notamment à 160 °C.

4. Procédé selon l'une des revendications précédentes, chez lequel le mélange réactionnel est malaxé, et/ou mélangé, et/ou transféré, et/ou re-transféré pendant la dépolymérisation basique.

5. Procédé selon l'une des revendications précédentes, chez lequel une étape ou plusieurs étapes sont effectuées sous un gaz inerte.

6. Procédé selon l'une des revendications précédentes, chez lequel l'étape de transfert entre la dépolymérisation basique et acide convertit le gâteau de filtration obtenu par la séparation solide/liquide réalisée sur l'effluent de réaction de la dépolymérisation basique sous la forme d'un produit de réaction pour la dépolymérisation acide.

7. Procédé selon l'une des revendications précédentes, chez lequel l'étape de transfert entre la dépolymérisation acide et basique convertit le gâteau de filtration obtenu par la séparation solide/liquide réalisée sur l'effluent de réaction de la dépolymérisation acide sous la forme de produit de réaction pour la dépolymérisation basique.

8. Dispositif permettant l'exécution d'un procédé de traitement de recyclage selon l'une des revendications 1 à 7, présentant un premier récipient de réacteur pour la dépolymérisation basique avec des moyens successifs dans le déroulement du procédé pour la préparation d'un effluent de réacteur, un deuxième récipient de réacteur pour la dépolymérisation acide avec des moyens successifs dans le déroulement du procédé pour la préparation de l'effluent de réacteur ainsi que des moyens pour le transfert d'un effluent de réacteur vers l'autre récipient de réacteur.

9. Dispositif selon la revendication 8, **caractérisé en ce que** les moyens de traitement comprennent des moyens pour une distillation, des moyens pour une séparation solide/liquide, des moyens pour un lessivage, des moyens pour une cristallisation et des moyens pour la température.

10. Dispositif selon l'une des revendications 8 à 9, **caractérisé en ce que** les moyens pour le transfert comprennent des moyens pour le lessivage, des moyens pour le séchage et des moyens pour une séparation solide/liquide.
